Europäisches Patentamt

European Patent Office

Office européen des brevets

(11) Veröffentlichungsnummer: **0 279 344**
**A2**

(12) **EUROPÄISCHE PATENTANMELDUNG**

(21) Anmeldenummer: **88101938.4**

(22) Anmeldetag: **10.02.88**

(51) Int. Cl.⁴: **F16L 11/08** , F16L 11/12 , //A47L9/24

(30) Priorität: **19.02.87 DE 3705292**

(43) Veröffentlichungstag der Anmeldung:
**24.08.88 Patentblatt 88/34**

(84) Benannte Vertragsstaaten:
**DE ES FR GB IT SE**

(71) Anmelder: **VOHRAN PATENTVERWERTUNGS-GMBH**
**Hattsteiner Strasse 20a**
**D-6240 Königstein 2(DE)**

Anmelder: **FORMEX GESELLSCHAFT FÜR KUNSTSTOFFFORMUNG MBH**
**Mattweg 5**
**D-7634 Kippenheim(DE)**

(72) Erfinder: **Alber, Tassilo**
**Mattweg 5**
**D-7634 Kippenheim(DE)**
Erfinder: **Giessler, Kurt**
**Am Schelmenbach 49**
**D-7614 Gengenbach(DE)**

(74) Vertreter: **Schubert, Siegmar, Dipl.-Ing. et al**
**Patentanwälte Dr. V. Schmied-Kowarzik Dr. P. Weinhold Dr.-Ing. G. Dannenberg Dr. D. Gudel Dipl.-Ing. S. Schubert Dr. P. Barz Grosse Eschenheimer Strasse 39 D-6000 Frankfurt am Main 1(DE)**

(54) **Flexibler Schlauch.**

(57) Bei einem flexiblen Schlauch, der eine mindestens aus einem ersten Innenschlauch (1) aus thermoplastischem bzw. elastomeren Material sowie einem Außenschlauch (4) bestehende Schlauchwandung aufweist, erstreckt sich eine abgeflachte Tasche (8) zur Aufnahme mindestens eines Energieleiters (10, 12, 13) im wesentlichen in Längsrichtung des Schlauches. Damit der Schlauch durch den Energieleiter, der auch nachträglich angebracht werden kann, möglichst wenig versteift wird, ist die Tasche (8) in Richtung zum Schlauchinneren elastisch dehnbar ausgebildet.

Fig. 1

## Flexibler Schlauch

Die Erfindung betrifft einen flexiblen Schlauch nach dem Oberbegriff des Anspruchs 1.

Als Schlauch der Gattung nach dem Oberbegriff des Anspruchs 1 ist insbesondere ein Staubsaugerschlauch mit einem Innenschlauch bekannt, auf dem ein flexibles Band - schraubengangförmig gewickelt ist (DE-OS 25 05 144). Das Band weist in bestimmten Abständen Einschnitte bzw. Nuten auf, die nach dem Wickeln des Bandes schraubengangförmig hintereinander liegen. Damit soll insgesamt eine - schraubengangförmige Nut gebildet werden, in die elektrische Leiter eingelegt oder eingezogen werden können. Die Einschnitte liegen dabei insbesondere auf der Innenseite des Bandes. Sie haben einen solchen Querschnitt, daß sich die elektrischen Leiter in einem bestimmten Ausmaß in Längsrichtung bewegen können. Ein Außenschlauch, der insbesondere als Ummantelung aus geflochtenem Material ausgebildet ist, umgibt das Band, um die elektrischen Leiter in der Nut zu halten und zu schützen. Die Ummantelung wird auf den verstärkten Innenschlauch aufgebracht, nachdem die elektrischen Leiter in der Nut eingelegt sind.

Nachteilig ist bei diesem Schlauchaufbau insbesondere, daß bereits bei der Herstellung des Schlauchs die Art und Anzahl der elektrischen Leiter bestimmt sein müssen, da sich diese nicht nachträglich in die Nut einlegen lassen. Die Wendel wird durch die Einschnitte geschwächt. Außerdem entstehen an jedem Einschnitt des verstärkenden Bands und dem eingelegten Leiter linienförmige Kontaktbereiche zwischen dem Einschnitt und dem Leiter, die diesen mechanisch verhältnismäßig stark beanspruchen, insbesondere, wenn der flexible Schlauch gebogen wird. In dem freien Raum zwischen den einzelnen Gängen des - schraubengangförmig aufgewickelten Bandes ist der elektrische Leiter nach außen nur durch die Hülle oder Ummantelung bzw. den Außenschlauch geschützt.

Ein anderer bekannter flexibler Kunststoffschlauch besteht im wesentlichen aus einem Innenschlauch, der als glatter oder gerippter, extrudierter oder gewickelter sowie gegebenenfalls verstärkter Schlauch oder als Kabel hergestellt werden kann, und einem diesen ummantelnden, zweckmäßig sehr dünnen Außenschlauch, der einen kreisförmigen Querschnitt aufweist (DE-OS 29 51 630, US-PS 43 68 348). Der Innenschlauch und auch der Außenschlauch sind aus thermoplastischem oder elastomerem Material hergestellt. Zwischen dem Innenschlauch und dem Außenschlauch soll im wesentlichen in Längsrichtung dieser Schläuche ein Zusatzkabel oder ein weiterer dünner Schlauch angeordnet werden. Zur Unterbringung dieser zusätzlichen Elemente ist aus dem Innenschlauch ein Kanal durch Verformung, z.B. Pressen oder Wärmeverformung bleibend ausgeformt, in den das zusätzliche Element eingelegt wird. - Nachteilig ist, daß die Form des Kanals entsprechend dem einzulegenden zusätzlichen Element festgelegt sein muß. Dies bedeutet, daß der Kunststoffschlauch nicht nach Herstellung des Kanals zu einem späteren Zeitpunkt variabel mit den zusätzlichen Elementen (Energieleitern) bestückt werden kann, wenn nicht eine den lichten Innenraum des Innenschlauches wesentlicher begrenzender Querschnitt des Kanals von vorne herein ausgeformt wird.

Zum Stand der Technik gehört weiterhin ein Verfahren zur Herstellung von Saugschläuchen, insbesondere für Staubsauger mit elektrischen Leitungen, die längs des Saugschlauches geführt sind (DE-OS 25 18 990). Der Saugschlauch wird mit mindestens einem in der Schlauchwand vorgesehenen Führungskanal in einem Arbeitsgang, vorzugsweise durch Extrudieren hergestellt. Der Führungskanal liegt auf der Außenseite der Schlauchwand. Der Führungskanal kann während oder nach der Herstellung im Querschnitt aufgeweitet werden, woran anschließend die elektrischen Leitungen in den aufgeweiteten Führungskanal eingeführt werden. - Nachteilig ist bei diesem Saugschlauch die Anordnung des Führungskanals auf der Außenseite der Schlauchwand, welcher die eingebrachten elektrischen Leitungen nur wenig - schützt. Der Führungskanal verläuft längs des Umfangs des Saugschlauches geradlinig oder in einer langgezogenen Schraubenlinie. Infolge der Verlagerung des Führungskanals mit seinen Leitungen weit nach außen ist jedoch die Beeinflussung der Biegsamkeit des Saugschlauches verhältnismäßig groß, d.h. der Saugschlauch läßt sich in seiner Querschnittsebene, in der der Führungskanal liegt, nur schlecht biegen. Außerdem stört der aus der Schlauchwand herausragende Führungskanal die glatte, gleichmäßig gekrümmte äußere Grundform des Saugschlauches.

Bekannt ist auch eine flexible Verbindungsleitung mit einem flexiblen Schutzmantel, der - schraubenlinienförmig verläuft und in dem ein erster flexibler SChlauch sowie konzentrisch zu diesem innen ein weiterer flexibler Schlauch angeordnet sind. Zwischen beiden Schläuchen wird zusätzlich zu dem durch den inneren Schauch begrenzten Kanal ein weiterer Kanal gebildet, der ein Medium leiten oder eventuell ein Steuerkabel aufnehmen kann. Zur Zentrierung der beiden Schläuche ineinander sind zusätzliche Mittel, insbesondere Zentrierscheiben an den Schlauchenden vorgesehen, die dessen Montage komplizieren.

Weiterhin ist ein flexibler Schlauch bekannt, der eine mindestens aus einem ersten Innenschlauch sowie einem Außenschlauch bestehende Schlauchwand aufweist, in der eine sich in Längsrichtung des Schlauches erstreckende, abgeflachte Tasche zur Aufnahme mindestens eines Energieleiters vorgesehen ist.

Hinzu kommt, daß in dem zylindrischen Hohlraum zwischen den beiden Schläuchen ein etwaig eingebrachtes Steuerkabel einen größeren Bewegungsraum, insbesondere in Umfangsrichtung der Verbindungsleitung hat, sich deswegen undefiniert verformen und bei seiner Bewegung scheuern kann. In einer Variante dieser Mehrkanal-Verbindungsleitung (EP-Veröffentlichung 80591 A1) ist statt der beiden koaxialen Schläuche in einem einzigen, in dem Schutzmantel angeordneten flexiblen Schlauch eine innere Trennwand angeordnet. Die Trennwand liegt in oder parallel zu einer Längsebene des Schlauches, in der auch die Längsachse liegt. Die Biegsamkeit des Schlauches in einer Ebene, in der die gerade Trennwand liegt, die nur schwer ausweichen kann, ist eingeschränkt.

Der Anmeldung liegt die Aufgabe zugrunde, einen flexiblen Schlauch der eingangs genannten Gattung bereitzustellen, der auch nach seiner Herstellung in unkomplizierter Weise wahlweise mit den gewünschten zusätzlichen Energieleitern ausgerüstet werden kann, wodurch aber der Schlauch möglichst wenig versteift werden soll. Die in den Schlauch eingebrachten Energieleiter sollen durch diesen möglichst gut gegen äußere Beschädigungen geschützt sein. Schließlich soll sich der Schlauch durch ein möglichst ansprechendes, glattflächiges Erscheinungsbild auszeichnen.

Die gestellte Aufgabe wird gelöst durch einen Schlauch mit den kennzeichnenden Merkmalen des Anspruchs 1.

Der flexible Schlauch kann zunächst nur mit der Tasche vorgefertigt werden, während die Auswahl der in die Tasche einzuführenden Energieleiter zu einem späteren Zeitpunkt durch den Anwender erfolgen kann.

Wenn die Tasche den oder die Energieleiter aufnimmt, tritt hierdurch keine äußere Ausbuchtung des Schlauches ein, da sich die Tasche infolge der ihr gegenüber außen liegenden Bewehrung im wesentlichen nur nach innen zu der Längsachse des Schlauchs elastisch ausdehnen kann. Da die Energieleiter nicht nur stellenweise durch die Bewehrung gehalten werden, sondern von der sich über die Schlauchlänge erstreckenden Tasche umgeben sind, liegt ein guter Schutz der Energieleiter gegen Beschädigungen von außen vor. Auch ist hierdurch keine starke stellenweise Belastung der Energieleiter durch die Bewehrung selbst zu befürchten.

Als Energieleiter, die in die Tasche eingeführt werden können, kommen sowohl elektrische Leiter in Betracht als auch optische Leiter in Form von Glasfasern oder aber pneumatische oder hydraulische Leiter, insbesondere in Form von Kunststoffröhrchen. Die Energieleiter können dazu verwendet werden, physikalische Größen wie Durchfluß und Temperatur einer Masse, die durch den Schlauch strömt, an dem Abgabeort der Masse in den Schlauch zu beeinflussen. Beispielsweise kann bei Verwendung eines solchen flexiblen Schlauchs an einem Staubsauger dieses Gerät durch einen Schalter ein-oder ausgeschaltet werden, der an einem dem Gerät abgewandten Ende des Staubsaugerschlauchs, welches normalerweise von der Bedienungs-bzw. Pflegeperson erfaßt wird, angeordnet ist. Ein weiterer Anwendungsfall ist die Leitung elektrischer Energie von einem Staubsaugerkorpus zu einem Antriebsmotor rotierender Bürsten, die an einem Saugkopf angeordnet sind.

In den Unteransprüchen 2 bis 15 sind Ausbildungen des Schlauches nach Anspruch 1 angegeben.

Besonders geschützt ist der Energieleiter in der Tasche, wenn diese innerhalb des ersten Innenschlauchs, d.h. benachbart dem lichten Durchgangsraum des flexiblen Schlauchs angeordnet ist. In diesem Fall ist der Energieleiter durch den ersten Innenschlauch zusätzlich geschützt. Wenn die Tasche elastisch aufgedehnt wird, um in ihr Energieträger unterzubringen, wirkt sich dies praktisch nur an dem zu dem lichten Durchgangsraum gerichteten Teil der Tasche aus, da sich die Ausdehnung kaum durch den ersten Innenschlauch und die Bewehrung sowie den Außenschlauch weiter nach außen ausdehnt.

Bevorzugt wird die elastische Tasche des flexiblen Schlauchs zur Aufnahme des Energieträgers oder der Energieträger nur soviel geöffnet, wie es das leichte Einführen dieses Energieträgers erfordert, und nicht überdehnt. Dadurch werden auch die Deformationen der Tasche nach innen zu dem lichten Durchgangsraum in dem Innenschlauch minimiert.

Eine Variante des flexiblen Schlauchs, bei dem die Tasche in dem ersten Innenschlauch angeordnet ist, zeichnet sich dadurch aus, daß in dem ersten Innenschlauch ein dünnwandiger zweiter Innenschlauch aus thermoplastischem bzw. elastomerem Material im wesentlichen anliegend angeordnet ist und daß der erste und der zweite Innenschlauch unter Freilassung eines Bereichs, der die Tasche bildet, miteinander fest verbunden sind. Zur Herstellung des ersten und des zweiten Innenschlauchs ebenso wie des Außenschlauchs eignen sich plastomere wie auch elastomere Kunststoffe. Wirtschaftlich lassen sich solche Schläuche im Extrusionsverfahren herstellen. Bei der genannten ersten Variante des flexiblen Schlauchs kann auf den zunächst extrudierten zweiten Innenschlauch der erste Innenschlauch und mit Hilfe von Kleber, bzw. durch Schweißung mit dem zweiten Innenschlauch so verbunden werden, daß nur der Bereich der Tasche nicht verklebt bzw. verschweißt wird.

Beonders vorteilhaft ist der Aufbau des Schlauchs nach Anspruch 4, da die Fertigung dieses Schlauchs raumsparend gestaltet werden kann.

Eine andere Variante des flexiblen Schlauchs, bei der die Tasche in dem ersten Innenschlauch angeordnet ist, besteht darin, daß in dem ersten Innenschlauch ein dünnwandiger zweiter Innenschlauch aus thermoplastischem bzw. elastomerem Material im wesentlichen anliegend angeordnet ist und daß der erste und der zweite Innenschlauch vollflächig dergestalt miteinander verbunden sind, daß sie in einem Bereich, der die Tasche bildet, durch eine eingebrachte Trennfolie, bzw. ein Trennmittel, trennbar sind. - Diese zweite Variante des Schlauches kann vorteilhaft durch Mehrfachextrusion hergestellt werden. Dabei wird in den Bereich der Tasche ein trennender Kunststoff zwischen den ersten und den zweiten Innenschlauch einextrudiert. Der trennende Kunststoff kann z.B. ein plastomeres Polyolefin sein. Auch bei einer aufeinanderfolgenden Extrusion des zweiten Innenschlauchs und darüber des ersten Innenschlauchs kann zweckmäßig ein Trennmittel oder eine Trennfolie in dem Bereich verwendet werden, in dem die Tasche gebildet werden soll. In diesem Fall kann der zuerst etrudierte zweite Innenschlauch vollflächig mit Kleber beschichtet sein, auf den in dem Bereich, in dem die Tasche gebildet werden soll, die Trennfolie bzw. das Trennmittel, kontinuierlich aufgebracht wird. Sodann wird darüber der erste Innenschlauch extrudiert, der sich außer in dem Bereich der Tasche, in dem sich die Trennfolie, bzw. das Trennmittel, befindet, mit dem zweiten Innenschlauch verbindet.

Nach dem zuletzt geschilderten Prinzip können auch weitere Innenschläuche vor dem Aufwickeln der wendelförmigen Bewehrung übereinander extrudiert werden, um jeweils zwischen zwei Innenschläuchen wenigstens eine Tasche einzuschließen.

In einer Weiterbildung der Erfindung dient als Tasche ein flachgelegter dünnwandiger Aufnahmeschlauch. Der Aufnahmeschlauch kann in vielfältiger Weise unter der Bewehrung angeordnet werden, und zwar nicht nur zwischen einem ersten und einem zweiten Innenschlauch, sondern auch außen zwischen einem Innenschlauch und der Bewehrung sowie innerhalb nur eines einzigen ersten Innenschlauch, so daß er an den lichten Durchgangsraum in diesem Innenschlauch unmittelbar angrenzt. In besonders vorteilhafter Weise ergibt der Aufnahmeschlauch als Tasche eine zusätzliche mechanische Bewehrung und elektrische Isolierung des von ihm aufgenommenen Energieleiters. Der Energieleiter - oder im Bedarfsfall mehrere Energieleiter - sind daher in dem Aufnahmeschlauch gut geschützt.

Die Wandung des flachgelegten Aufnahmeschlauchs kann aus einem thermoplastischen bzw. elastomeren Material bestehen. Es eignen sich Kunststoffe in einem Shore-A-Härtebereich zwischen 45 - 80. Die Wandung des Schlauches ist damit so weich, daß sich dieser zu einem abgeflachten Band, beispielsweise auf den ersten Innenschlauch, aufwickeln läßt.

Hierzu beträgt die Wandstärke des flachgelegten Aufnahmeschlauchs bevorzugt zwischen 0,2 mm und 1 mm. - Die Breite des flachgelegten Aufnahmeschlauchs kann bis zu mehreren Zentimetern betragen.

Vor allem, wenn die Aufnahmeschläuche in bestimmten Anwendungsfällen des flexiblen Schlauchs verhältnismäßig großen Kräften ausgesetzt sind, empfiehlt es sich, einen flachgelegten Aufnahmeschlauch zu verwenden, dessen Wandung axial und radial durch Textilfäden oder Gewebe verstärkt ist.

Durch die Verwendung des flachgelegten dünnwandigen Aufnahmeschlauchs als Tasche wird jedenfalls dann die im wesentlichen zylindrische Außenfläche des flexiblen Schlauchs insgesamt nicht gestört, wenn der Aufnahmeschlauch, der zusammengelegt nur eine geringe Stärke aufweist, unterhalb der Bewehrung oder noch tiefer in dem ersten Innenschlauch angeordnet ist. Wenn auf diesen Vorteil verzichtet wird, ist es jedoch auch möglich, den flachgelegten Aufnahmeschlauch auf der Bewehrung unter dem Außenschlauch anzuordnen, oder sogar auf dem Außenschlauch anzubringen. Dies ist insofern noch vertretbar, als der zusammengelegte Aufnahmeschlauch nur insoweit aufgedehnt wird, als es der oder die in ihn eingeführte(n) Energieträger bedingen. Allerdings geht bei der letztgenannten Anordnung des Aufnahmeschlauchs auch ein Teil der Schutzwirkung des flexiblen Schlauchs an sich für den Energieträger verloren und die Flexibilität des Schlauchs als Ganzem wird herabgesetzt.

Verschiedene Varianten der Anordnung des flachgelegten dünnwandigen Aufnahmeschlauchs sind in den Ansprüchen 10 bis 13 dargelegt.

Besonders hervorzuheben ist die Ausführungsform nach Anspruch 12, wonach der flachgelegte Aufnahmeschlauch mit dem ersten Innenschlauch verschweißt oder verklebt wird. Dadurch ist mit geringstem Materialaufwand die die Energieleiter aufnehmende Tasche sehr weit nach innen in die Nähe der Längsachse des flexiblen Schlauchs verlegt und ruft deswegen geringe Widerstände gegen Biegen des flexiblen Schlauchs hervor. Außerdem vermindert der flachgelegte Aufnahmeschlauch den lichten Querschnitt bzw. den lichten Durchgangsraum in dem Innenschlauch nur sehr wenig. Dies gilt auch, wenn der Energieleiter oder die Energieleiter in den Aufnahmeschlauch eingeführt ist (sind).

Wenn der flachgelegte Aufnahmeschlauch streng parallel zu der Längsachse des flexiblen Schlauchs angeordnet ist und der Energieleiter in den Aufnahmeschlauch eingeführt ist, kann eine Versteifung in der Biegeebene des flexiblen Schlauchs auftreten, in der die Längsachse des flexiblen Schlauchs und der Energieleiter liegen.

Diese Versteifung kann wesentlich herabgesetzt werden, wenn der flachgelegte Aufnahmeschlauch wendelförmig auf den ersten oder zweiten Innenschlauch aufgewickelt wird, wobei die Steigung zur Gewichts-und Materialersparnis groß sein soll. Als bevorzugt hat es sich herausgestellt, daß gemäß Anspruch 14 der flachgelegte Aufnahmeschlauch zwischen 1/4 bis 2-mal per Meter um den ersten oder zweiten Innenschlauch gewickelt wird.

Um bei der bestimmungsgemäßen Verwendung des flexiblen Schlauchs mit der flachgelegten Tasche den Energieleiter oder die Energieleiter leicht einführen zu können, wird nach Anspruch 16 die flachgelegte Tasche zur Einführung des Energieleiters zunächst mit Druckluft auf einen runden Querschnitt aufgebläht, der größer als derjenige des Energieleiters ist. Durch die unter dem Einfluß der Druckluft stehende aufgeweitete Tasche kann der Energieleiter leicht hindurchgezogen oder -geschoben werden, wobei er auf einem Luftpolster gleitet.

Nach Abschalten der Druckluft zieht sich die elastische Tasche wieder zusammen, bis sie sich an den Energieleiter anschmiegt, d.h. über dessen Umfang weitgehend anliegt.

Bevorzugt wird jedoch die Tasche nach Anspruch 18 dimensioniert, wonach der aufgeblähte Querschnitt der Tasche nur soweit zurückgeht, bis sie nur an zwei gegenüberliegenden Stellen des Energieleiters anliegt. Dabei berührt der Energieleiter über seine Länge annähernd linienförmig einander gegenüberstehende Innenseiten der Tasche - bzw. eines in der Tasche untergebrachten Aufnahmeschlauches -, so daß er seitlich, d.h. in Umfangsrichtung des Schlauchs, und auch in Längsrichtung beweglich ist. Dadurch wird eine hohe Flexibilität des Schlauchs trotz des in ihm integrierten Energieleiters erreicht.

Nach Anspruch 16 kann der mit der flachen Tasche ausgestattete Schlauch, statt zur Aufnahme wenigstens eines Energieleiters auch in der Weise eingesetzt werden, daß die flachgelegte Tasche zum Leiten eines flüssigen oder gasförmigen Mediums verwendet wird. - Die flachgelegte Tasche bildet somit hilfsweise einen zweiten Kanal für das Medium, tritt aber, wenn kein Medium geleitet werden soll, praktisch nicht in Erscheinung.

Wenn die elastische Tasche einen Aufnahmeschlauch nach Anspruch 6 enthält, kann der Energieleiter von diesem Aufnahmeschlauch in analoger Weise wie in den Ansprüchen 14 und 15 angegeben, eingeschlossen sein.

Ausführungsbeispiele der Erfindung werden im folgenden anhand einer Zeichnung mit 6 Figuren erläutert. Es zeigen:

Fig. 1 einen flexiblen Schlauch mit drei eingebrachten Energieleitern in einer schaubildlichen Darstellung,

Fig. 2 einen Querschnitt durch eine erste Ausführungsform des flexiblen Schlauchs ohne Energieleiter,

Fig. 3 einen Querschnitt durch eine zweite Ausführungsform des flexiblen Schlauchs ohne Energieleiter,

Fig. 4 einen Querschnitt durch eine dritte Ausführungsform des flexiblen Schlauchs ohne Energieleiter, jedoch mit einem Aufnahmeschlauch,

Fig. 5 einen Querschnitt durch eine vierte Ausführungsform des flexiblen Schlauchs ohne Energieleiter, jedoch mit einem Aufnahmeschlauch, und

Fig. 6 eine fünfte Ausführungsform des flexiblen Schlauchs ohne Energieleiter, jedoch mit Aufnahmeschlauch.

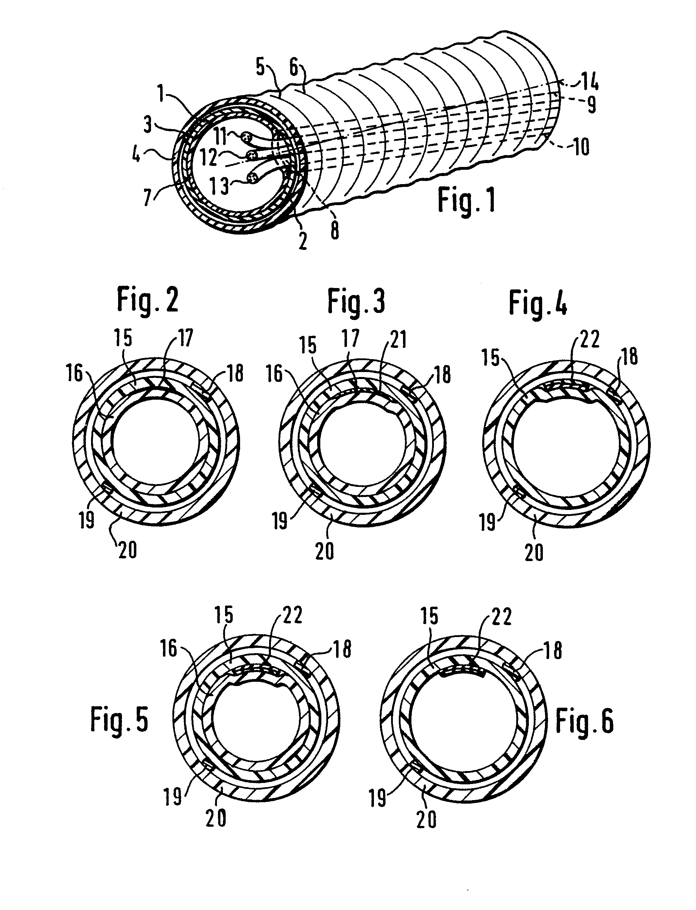

In den Figuren 3 bis 6 sind übereinstimmende Elemente des Schlauchs mit gleichen Bezugszeichen bezeichnet.

Gemäß Fig. 1 weist der flexible Schlauch einen ersten dünnwandigen Innenschlauch aus thermoplastischem oder elastomerem Kunststoff auf, der mit einer wendelförmigen Bewehrung bestehend aus einem relativ steifen Band 2 und einem Draht 3 verstärkt ist. Über die Bewehrung ist ein ebenfalls dünnwandiger Außenschlauch 4 extrudiert, der ebenfalls aus einem thermoplastischen oder elastomeren Material besteht. Durch den dünnwandigen eng anliegenden Außenschlauch ist erkennbar, daß die Bewehrung mit relativ kleiner Steigung aufgewickelt ist, siehe Gänge 5 und 6.

Innerhalb des ersten Innenschlauchs ist ein zweiter Innenschlauch 7 angeordnet, der mit dem ersten Innenschlauch mit Ausnahme des Bereichs einer Tasche 8 fest verbunden ist. Der große Steigungswinkel der Tasche ergibt sich aus deren unterbrochenen Begrenzungslinien 9 und 10. Die im ursprünglichen Zustand entlang dem Schlauchumfang flachgelegte Tasche, siehe auch die weiter unten zu besprechenden Figuren 2 und 3, ist in Richtung zum Schlauchinneren elastisch dehnbar, um die dargestellten drei Energieleiter 11, 12 und 13 aufzunehmen. Bei einer größeren oder kleineren Anzahl von Energieleitern ist die begrenzt elastische Tasche mehr oder weniger gedehnt, jedoch zumindest dann, wenn ein insofern bevorzugtes elastomeres Material für den zweiten Innenschlauch verwendet wird, nur insoweit, als dies die Querschnitte der Energieleiter erfordern. Dabei liegen die Energieleiter 11, 12, 13 bevorzugt nur jeweils mit zwei äußeren linienförmigen Berührungsstellen innen an der Tasche an, so daß sie im wesentlichen in radialer Richtung des Schlauches gehalten werden, jedoch in dessen Umfangsrichtung in der Tasche in einem gewissen Maße beweglich sind. Damit behält der Schlauch mit den drei in die Tasche eingebrachten Energieleitern eine relativ große Flexibilität.

Die Längsachse des gerade dargestellten, jedoch biegsamen Schlauchs in seiner Gesamtheit ist mit 14 angedeutet.

Die Schlauchquerschnitte nach den Figuren 2-6 sind vergrößert dargestellt; auch bei ihnen sind die Innenschläuche und der Außenschlauch dünnwandig.

Gemäß den Ausführungsformen nach den Figuren 2 und 3 liegt an einem ersten Innenschlauch 15 innen ein zweiter Innenschlauch 16 mit Ausnahme eines Bereichs an, der eine elastische Tasche 17 bildet. Der erste Innenschlauch und der zweite Innenschlauch sind außerhalb des Bereichs der elastischen Tasche 17 miteinander verbunden. Über den ersten inneren Schlauch ist wiederum eine Bewehrung bestehend aus einem verhältnismäßig steifen Band 18 und einem Draht 19 wendelförmig gewickelt. Die Steigung des Bands 18 und des Drahts 19 ist, wie in Fig. 1 dargestellt, klein, während die in Richtung der Längsachse durchgehende flexible Tasche 17 mit größerer Steigung verläuft. Abgeschlossen ist der Schlauch nach außen durch einen Außenschlauch 20, der eng an dem Band 18 und dem Draht 19 anliegt.

Die Ausführungsform des flexiblen Schlauchs nach Fig. 3 unterscheidet sich von derjenigen nach Fig. 2 dadurch, daß sich in der elastischen Tasche 17 eine durchgehende Trennfolie 21 befindet. Wegen dieser Trennfolie kann die Tasche zum Einführen von Energieleitern elastisch gedehnt, d.h. in Richtung zur Längsachse aufgeweitet werden, obwohl bei der Herstellung des flexiblen Schlauchs auch der erste und/oder der zweite Innenschlauch vollflächig verbunden sind, um die beiden Innenschläuche außerhalb des Bereichs der Tasche miteinander zu verbinden.

Die Ausführungsformen nach den Figuren 4-6 haben die Besonderheit, daß die in Richtung zum Schlauchinneren elastisch dehnbare Tasche nicht nur durch einen Spalt zwischen dem ersten Innenschlauch und einem zweiten Innenschlauch gebildet wird, sondern durch einen flachgelegten dünnwandigen elastischen Aufnahmeschlauch 22, der ebenfalls aus einem thermoplastischen oder elastomeren Material besteht und zum Inneren des flexiblen Schlauchs, d.h. zu der Längsachse gedehnt werden kann. Die Form des flachgelegten dünnwandigen Aufnahmeschlauchs, die an die Krümmung des ersten Innenschlauchs angepaßt ist, so daß eine Außenseite an dem ersten Innenschlauch anliegend an diesem befestigt werden kann, ergibt sich aus den Fig. 4-6.

Im einzelnen befindet sich in der Ausführungsform nach Fig.4 der Aufnahmeschlauch 22 wiederum mit großer Steigung gewendelt, außen auf dem ersten Innenschlauch und unterhalb der wendelförmigen Bewehrung bestehend aus dem Band 18 und dem Draht 19. Der Aufnahmeschlauch ist in der Ausführungsform nach Fig. 4 an den Stellen, an denen er innen an der Bewehrung anliegt, fest zumindest mit dem Band verbunden.

In der Ausführungsform nach Fig. 5 ist der Aufnahmeschlauch 22 zwischen dem ersten Innenschlauch 15 und dem auch hier vorhandenen zweiten Innenschlauch 16 angeordnet und mit den Außenseiten an beiden Schläuchen anliegend mit diesen verbunden. Wenn in den Aufnahmeschlauch wenigstens ein Energieleiter eingeführt wird, dehnt sich der Aufnahmeschlauch im wesentlichen zusammen mit dem zweiten Innenschlauch elastisch nach innen zu der Längsachse des Schlauchs, da dessen Außenumfang durch die Bewehrung im wesentlichen festgehalten wird.

In der Ausführungsform nach Fig. 6 ist gezeigt, wie der Aufnahmeschlauch an der Innenwand des ersten Innenschlauchs befestigt ist, während auf einen zweiten Innenschlauch verzichtet wird. Infolge der dargestellten Verhältnisse der Wandstärke des Aufnahmeschlauchs und des ersten Innenschlauchs wird sich der Aufnahmeschlauch praktisch ausschließlich nach Innen zu der Längsachse des Schlauchs verformen. Der lichte Durchgangsraum des flexiblen Schlauchs ist hier von allen gezeigten Ausführungsformen am wenigsten, nämlich nur durch den Aufnahmeschlauch selbst und dem gegebenenfalls in ihm enthaltenen Energieleiter reduziert.

Die Ausführungsformen nach den Figuren 2-6 sind in dem Zustand dargestellt, wie der flexible Schlauch von den Schlauchherstellern an den Anwender geliefert werden kann, während der in Fig. 1 gezeigte Zustand erst durch den Anwender durch Einführen der Energieleiter 11-13 herbeigeführt werden kann. Jedoch kann der Schlauch auch im Zuge der Schlauchherstellung mit den Energieleitern versehen werden, wenn die gewünschte Ausstattung bestimmt ist, und in Gebinden geliefert werden.

**Ansprüche**

1. Flexibler Schlauch aus mindestens einem ersten dünnwandigen Innenschlauch aus thermoplastischem oder elastomeren Material, einem Außenschlauch und wenigstens einer auf den Innenschlauch gewickelten wendelförmigen Bewehrung, wobei unterhalb der Bewehrung mindestens ein Energieleiter mit einem Steigungswinkel vorgesehen sein kann, der größer als derjenige der Bewehrung ist,

**dadurch gekennzeichnet,**

daß zur Aufnahme des Energieleiters (11, 12, 13) unterhalb der Bewehrung (2, 3; 18, 19) mindestens eine entlang dem Umfang des ersten Innenschlauches flache in Richtung zum Schlauchinneren dehnbare elastische Tasche (8; 17) angeordnet ist, die in Richtung der Längsachse (14) des Schlauches durchgehend ist, jedoch nur einen Teil des jeweiligen Schlauchumfangs einnimmt.

2. Flexibler Schlauch nach Anspruch 1,

**dadurch gekennzeichnet,**

daß die Tasche (8; 17) innerhalb des ersten Innenschlauchs (1; 15) angeordnet ist.

3. Flexibler Schlauch nach Anspruch 1 oder 2,

**dadurch gekennzeichnet,**

daß in dem ersten Innenschlauch(1; 15) ein dünnwandiger zweiter Innenschlauch (7; 16) aus thermoplastischem bzw. elastomeren Material im wesentlichen anliegend angeordnet ist und daß der erste und der zweite Innenschlauch unter Freilassung eines Bereichs, der die Tasche (8; 17) bildet, miteinander fest verbunden sind.

4. Flexibler Schlauch nach Anspruch 3 ,

**dadurch gekennzeichnet,**

daß die Verbindung zwischen dem ersten Innenschlauch (1; 15) und dem zweiten Innenschlauch (7; 16) unter Freilassung des Bereiches, der die Tasche (8; 17) bildet, durch Koextrusion hergestellt ist.

5. Flexibler Schlauch nach Anspruch 1 oder 2,

**dadurch gekennzeichnet,**

daß in dem ersten Innenschlauch (15) ein dünnwandiger zweiter Innenschlauch (16) aus thermoplastischem bzw. elastomeren Material im wesentlichen anliegend angeordnet ist, daß der erste und der zweite Innenschlauch vollflächig mit einem sie verbindenden Kleber versehen sind und daß sie in einem Bereich, der die Tasche (17) bildet, durch eine eingebrachte Trennfolie (21) bzw. ein Trennmittel getrennt sind.

6. Flexibler Schlauch nach Anspruch 1 oder 2,

**dadurch gekennzeichnet,**

daß als Tasche ein flachgelegter dünnwandiger Aufnahmeschlauch (22) dient.

7. Flexibler Schlauch nach Anspruch 1 oder 2,

**dadurch gekennzeichnet,**

daß die Wandung des flachgelegten Aufnahmeschlauchs (22) aus einem thermoplastischen bzw. elastomeren Material besteht.

8. Flexibler Schlauch nach Anspruch 6 oder 7,

**dadurch gekennzeichnet,**

daß die Wandstärke des flachgelegten Aufnahmeschlauchs (22) zwischen 0,2 mm und 1,0 mm beträgt.

9. Flexibler Schlauch nach einem der Ansprüche 6 - 8,

**dadurch gekennzeichnet,**

daß die Wandung des flachgelegten Aufnahmeschlauchs axial und radial durch Textilfäden oder Gewebe verstärkt ist.

10. Flexibler Schlauch nach Anspruch 9,

**dadurch gekennzeichnet,**

daß der flachgelegte Aufnahmeschlauch mit der darübergewickelten Bewehrung verschweißt oder verklebt wird.

11. Flexibler Schlauch nach einem der Ansprüche 6 - 10,

**dadurch gekennzeichnet,**

daß die aus dem flachgelegten dünnwandigen Aufnahmeschlauch (22) bestehende Tasche zwischen dem ersten Innenschlauch (15) und dessen Bewehrung (18, 19) angeordnet ist.

12. Flexibler Schlauch nach einem der Ansprüche 6 - 10,

**dadurch gekennzeichnet,**

daß in dem ersten Innenschlauch (15) ein dünnwandiger zweiter Innenschlauch (16) aus thermoplastischem bzw. elastomeren Material im wesentlichen anliegend ange ordnet ist und daß der erste und der zweite Innenschlauch unter Freilassung eines Bereichs, der die aus dem flachgelegten dünnwandigen Aufnahmeschlauch (22) bestehende Tasche aufnimmt, miteinander fest verbunden sind.

13. Flexibler Schlauch nach einem der Ansprüche 6 - 10,

**dadurch gekennzeichnet,**

daß die aus dem flachgelegten dünnwandigen Aufnahmeschlauch (22) bestehende Tasche innen an dem ersten Innenschlauch (15) angebracht ist.

14. Flexibler Schlauch nach einem der Ansprüche 11 - 13,

**dadurch gekennzeichnet,**

daß der flachgelegte Aufnahmeschlauch (22) mit dem ersten Innenschlauch verschweißt oder verklebt wird.

15. Flexibler Schlauch nach Anspruch 11 oder 12,

**dadurch gekennzeichnet,**

daß der flachgelegte Aufnahmeschlauch zwischen 1/4 bis 2 mal per Meter um den ersten oder zweiten Innenschlauch (15 bzw. 16) gewickelt wird.

16. Verfahren zur Anwendung eines flexiblen Schlauchs nach einem der Ansprüche 1 -5 ,
**dadurch gekennzeichnet,**
daß die flachgelegte elastische Tasche (8; 17) zur Einführung des Energieleiters mit Druckluft auf einen runden Querschnitt aufgebläht wird, der größer als derjenige des Energieleiters ist.

17. Verfahren nach Anspruch 16,
**dadurch gekennzeichnet,**
daß bei Ausgleich des inneren Überdrucks der aufgeblähte Querschnitt der Tasche (8; 17) zurückgeht, bis sich die flexible Tasche an den eingeführten Energieleiter anschmiegt.

18. Verfahren nach Anspruch 16,
**dadurch gekennzeichnet,**
daß bei Ausgleich des inneren Überdrucks der aufgeblähte Querschnitt der Tasche (8; 17) zurückgeht, bis sie an zwei gegenüberliegenden Stellen des Energieleiters anliegt.

19. Verwendung eines flexiblen Schlauches nach einem der Ansprüche 1 bis 5 mit der Maßgabe, daß die flachgelegte Tasche (22) selbst zum Leiten eines flüssigen oder gasförmigen Mediums verwendet wird.

Fig.1

Fig.2

Fig.3

Fig.4

Fig.5

Fig.6